# EUROPEAN PATENT APPLICATION

(11) **EP 3 567 012 A1**
(43) Date of publication of application: **13.11.2019**
(21) Application number: 18000431.9
(22) Date of filing: 07.05.2018
(51) Int. Cl.: C02F 3/30, C02F 1/52, C02F 1/66, C02F 11/04, C02F 101/10

(54) **METHOD FOR OPERATING A WASTEWATER TREATMENT PLANT FOR PHOSPHORUS TREATMENT OF EFFLUENT**

(71) Applicant: Veolia environnement-VE, 75008 Paris (FR)
(72) Inventor: Paillard, Hervé, 86 340 Vernon (FR); Sardet, Christophe, 04105 Leipzig (DE); Bouchereau, Céline, 04275 Leipzig (DE); Humbert, Hugues, 77410 Claye Souilly (FR)
(74) Representative: Patentanwaltskanzlei Methling

(57) **Abstract**

The invention relates to a method for operating a wastewater treatment plant (1) for treating effluent (2), in particular for recovering phosphorus from the effluent (2) to be treated and for respecting a phosphorus discharge limit in the effluent. The method comprises the steps of carrying out an enhanced biological phosphorus removal process on at least a part of the effluent (2) to be treated in a water line of the plant (1), deriving a sludge (4) from the effluent (2) that is being treated in the water line of the plant (1), subjecting the derived sludge (4) to a step of acidification (20) giving an acidified sludge (5), and carrying out a step of a first recovery (60) of a phosphorus product (9) in a liquid phase of the acidified sludge (5) or directly in the acidified sludge giving a re-usable product and a phosphorus depleted acidified sludge (5a).

## Description

The present invention relates to a method for operating a wastewater treatment plant (WWTP) for treating effluent, in particular for recovering phosphorus from the effluent to be treated and for respecting a phosphorus discharge limit in the effluent according to the preamble of claim 1. The present invention relates further to a wastewater treatment plant according to the preamble of claim 16.

Phosphorus (P), a component of DNA, is an essential nutrient for life and for the development of every living being. It is a key ingredient in the fertilizers used in agriculture and for animal feed. It is primarily produced by mining, but resources are not limitless, and no synthetic substitute currently exists, while demand is growing due to the pressure of worldwide population growth.

Unsurprisingly, wastewater generated by human activities contains a lot of phosphorus, which, if recovered efficiently would enable a sustainable production of phosphate minerals and limit the eutrophication of natural habitats. Accordingly, controlling phosphorus discharge from municipal and industrial wastewater treatment plants is a key factor in preventing eutrophication of surface waters.

Until now waste water treatment plants were focused on phosphorus discharge limits at their outlet an, therefore, used mainly iron or aluminum salts to precipitate the phosphorus contained in the effluent into the sludge in form from iron or aluminum phosphates (so-called Chemical-P or Chem-P). Enhanced biological phosphorus removal processes (so-called EBPR or Bio-P), where the phosphorus is accumulated and biologically bounded in Polyphosphate accumulating organisms (PAOs), are currently rarely used alone as without additional strategies to remove the phosphorus there are not always sufficient to reach the required phosphorus discharge limit in effluent. Moreover, the iron (Fe) or aluminum (Al) salts used for phosphorus elimination are also often used simultaneously to remove hydrogen sulfide (H₂S) at the inlet and/or during the digestion step in order to control the corrosion of infrastructures.

There will be upcoming regulations regarding the recovery of phosphorus from effluent, for example in Austria and Switzerland and Germany, where at least a 50% phosphorus recovery in municipal wastewater treatment plants or 80% from sludge ashes will be enforced. The only phosphorus recovery processes that currently can guaranty this performance in any sludge treatment schemes are based on chemical leaching of digested sludge in low pH conditions (pH-values from 2 to 4) to dissolve the iron or aluminum phosphate salts which are only soluble at those low pH-values, followed by a precipitation mainly as struvite (magnesium ammonium phosphate) at pH-values of about 8.

Chemical leaching is based on an addition of a strong acid, such as sulfuric acid, in a leaching reactor in order to reach a pH-value comprised between 2 and 4.5. The sludge thereafter undergoes a solid/liquid separation and the liquid phase is sent to a precipitation reactor. In the precipitation reactor, sodium hydroxide is added to reach a pH-value comprised between 7 and 9 together with other chemicals, such as MgCl₂ or MgO or Mg(OH)₂, in order to precipitate phosphates into struvite crystals. Moreover, a complexing agent is needed to catch the released metals so that they do not re-precipitate instead of magnesium (Mg) or calcium (Ca) phosphate compounds - for instance, citric acid can be used to trap the iron, but it is very expensive. Since these processes have a very high chemical demand, they carry a very high cost of treatment for a given quantity of recovered phosphorus.

Moreover, the use of chemical coagulant in mainstream wastewater treatment is expensive, increases the sludge volumes to be treated, is not the best ecological option, and can cause some operating problems, for example, a risk of self-ignition during a sludge drying step.

Thereby, the processes known from the state of the art represent unaffordable chemical demand compared to recovery processes from sludge ashes, the alternative way in the regulation. Recovering phosphorus from ashes however means lengthy and expensive implementation of new mono-incineration capacity and or complex contractual alliances with other operators.

On the other side, the conditions of phosphorus recovery from biologically bounded phosphorus (Bio-P) could be economically much more interesting than those for the chemically bounded phosphorus (Chem-P). Indeed, the Bio-P contained in phosphate accumulating organisms (PAOs) can be released on phosphate form in anaerobic conditions, for instance in the digestion. However, due to the pH-value and biological conditions in the digestor the phosphates directly re-precipitate for instance with calcium or magnesium (struvite incrustation), so that the 50% recovery target cannot be achieved at this stage. As known from the prior art, natural bio-acidification provides better conditions to reach high rates of P-release in a recoverable phosphate form. However, none of the methods operating this bio-acidification can guaranty a P-recovery over 50%, as the Bio-P process and/or the bio-acidification step are not optimized, but also because the proportion of chemical bounded P (Chem-P), which is not entirely released through bio-acidification, remains too high.

It is therefore an object of the present invention to provide a method for operating a wastewater treatment plant (WWTP) for treating effluent that enables a phosphorus recovery of at least 50% from effluent to be treated It is a further object of the present invention to provide a method for operating a WWTP for treating effluent that enables at the same time to reach a phosphorus discharge limit in the effluent treated in the WWTP.

The prior art problems are solved, and the objects are achieved by the present invention through taking an approach of reversing the strategy of phosphorus treatment in a WWTP in order to manage simultaneously the recovery of more than 50% of phosphorus at a local stage and the respect of a discharge limit of phosphorus in effluent with reduced costs and reduced use of chemicals compared to the above mentioned prior art approaches. The main idea is to increase the ratio of Bio-P to Chem-P in sludge to be treated, as not so many chemicals a needed to recover Bio-P from the sludge.

It is an advantage of the embodiments of the present invention that a reduction of chemical coagulation with iron and/or aluminum salts for the phosphorus and/or the biogas treatment can be achieved. In particular, it will be possible to reduce or even eliminate the dosage of a phosphorus coagulant at an inlet of a WWTP.

It is a further advantage of embodiments of the present invention that a phosphorus recovery of at least 50% based on the phosphorus content in sludge or a limit of less than 20 g phosphorus/kg dry matter from sludge at the local stage can be reached, while a phosphorus discharge limit in effluent treated in the WWTP can be reached.

It is a still further advantage of embodiments of the present invention that the contact time and volume required for the bio-acidification step can be minimized through a greater reaction kinetic at an optimum pH-value, while the required amount of chemicals to maintain the optimum pH-range can be minimized.

It is a still further advantage of embodiments of the present invention that a fertilizer, such as brushite and/or struvite, can be produced to be directly available at the WWTP and that can be directly used for agricultural uses.

It is a still further advantage of embodiments of the present invention that the required costs for the phosphorus crystallization, in particular, through the reduction or even elimination of the use of a chemical agent to trap the iron or aluminium salts before precipitation, so as the selection of the most appropriate product depending of filtrate characteristics (pH-value, concentrations, etc.) can be minimized and options for product valorisation can be utilized.

It is a still further advantage of embodiments of the present invention that a further treatment (tertiary treatment) of the effluent at the outlet of the WWTP can be enabled in case of very low discharge limit required, for instance less than 0,5 mg/l of phosphorus in effluent.

It is a still further advantage of embodiments of the present invention that struvite incrustation problems can be solved and a further stripping or recovery of nitrogen (N) after digestion can be facilitated, as the phosphorus concentration is reduced, which prevents uncontrolled precipitation.

It is a still further advantage of embodiments of the present invention that the safe operation at sludge drying plant (no risk of self ignition due to presence of iron salts in dried sludge) can be enabled, and all thermal valorisation ways (for instance co-incineration in cement plant with ecological value) can be utilized.

It is a still further advantage of embodiments of the present invention that it can be possible to minimize the volume required for Bio-P treatment in case of a new WWTP.

It is a still further advantage of embodiments of the present invention that the most cost-effective strategy regarding, for example, to location of a WWTP and quantities of coagulant dosing, can be adjusted for each WWTP using a specific modeling tool. After implementation, a real time advanced control system will guaranty the achievement of the previously cited objects and in particular the minimization of chemicals independently from sludge quality variations.

According to the advantageous embodiments of the present invention, a method for operating a wastewater treatment plant for treating effluent, in particular for recovering phosphorus from the effluent to be treated and for respecting a phosphorus discharge limit in the effluent, comprises the steps of: carrying out an enhanced biological phosphorus removal process on at least a part of the effluent to be treated in a water line of the plant, deriving a sludge from the effluent that is being treated in a water line of the plant, subjecting the derived sludge to a step of acidification giving an acidified sludge, adding a mineral or organic acid and/or a base and/or carbon dioxide and/or an organic co-substrate before, after and or simultaneously to the step of acidification to further control the pH-value, and carrying out a step of a first recovery of a phosphorus product in a liquid phase of the acidified sludge or directly in the acidified sludge giving a re-usable product and a phosphorus depleted acidified sludge. The step of acidification is based on bio-acidification and includes a step of acidogenesis, utilizing, for example, a pH advanced control system to maintain the optimal pH conditions to optimize the phosphorus release. The first recovery of a phosphorus product gives preferably brushite and/or struvite and/or any other recoverable product. In particular, the recovery of phosphorus from the effluent to be treated and the respecting a phosphorus discharge limit in the effluent can be simultaneous. The Method according to preferred embodiments of the present invention can be used to maximize the phosphorus recovery from the effluent to be treated. Advantageously, at least 50% of phosphorus based on the phosphorus content in sludge to be treated can be recovered using the method according to preferred embodiments of the present invention, while the treated effluent has a phosphorus content at or below a predetermined phosphorus discharge limit.

According to preferred embodiments of the present invention, the method further comprises the steps of using a modeling tool to define process steps and adjust process parameters for treating the effluent to current conditions, and using a real time control system to continuously apply the adjusted process parameter to the operation of the wastewater treatment plant

According to preferred embodiments of the present invention, the method further includes the steps of carrying out a step of digestion of the phosphorus depleted acidified sludge giving a digested sludge, carrying out a step of a solid/liquid separation of the digested sludge giving a slurry and a phosphorus depleted water, and returning at least a part of the phosphorus depleted water to the water line of the plant for mixing with the effluent.

According to preferred embodiments of the present invention, the method further includes the step of subjecting the effluent mixed with the phosphorus depleted water to a tertiary phosphorus treatment at an end of the water line to reduce the remaining phosphorus in the effluent to achieve the phosphorus discharge limit in the effluent before the effluent leaves the plant. By carrying out the tertiary phosphorus treatment it may be possible to further increase the phosphorus recovery by recovering a re-usable product.

According to preferred embodiments of the present invention, the method further includes an additional step of a solid/liquid separation of the acidified sludge, giving a slurry and an acidified water, wherein the additional step of the solid/liquid separation of the acidified sludge is carried out either before or after the step of the first recovery of a phosphorus product.

According to preferred embodiments of the present invention, the step of the first recovery of a phosphorus product is carried out either in the acidified water giving a phosphorus depleted acidified water or directly in the acidified sludge giving a phosphorus depleted acidified sludge.

According to preferred embodiments of the present invention, the phosphorus depleted acidified water is added to the slurry prior to the step of digestion.

According to preferred embodiments of the present invention, at least a part of the acidified sludge, either the phosphorus rich acidified sludge or the phosphorus depleted acidified sludge, or the acidified water, either the phosphorus rich acidified water or the phosphorus depleted acidified water, is returned to the enhanced biological phosphorus removal process in the water line of the plant as a source of carbon, especially of volatile fatty acids to increase the efficiency of the Bio-P process.

According to preferred embodiments of the present invention, the step of acidification of the sludge includes a step of adding a mineral or organic acid and/or a base and/or carbon dioxide and/or an organic co-substrate to further control the pH-value.

According to preferred embodiments of the present invention, the step of acidification is preceded by a step of pre-acidification or followed by a step of post-acidification of the sludge to be treated.

According to preferred embodiments of the present invention CO₂ is injected during the step of pre-acidification and/or post-acidification, which can be combined with a step of solid/liquid separation for instance in a flotation reactor.

According to preferred embodiments of the present invention, the step of acidification of the sludge is carried out at a pH-value comprised between 3.5 and 5,5 in a sludge reactor having a hydraulic retention time between 1 day to 8 days depending on the temperature, which is comprised between 10°C and 40°C.

According to preferred embodiments of the present invention, the step of the first recovery of a phosphorus product is performed in conditions of a pH-value lower than 7.

According to preferred embodiments of the present invention, the method further includes a step of a second recovery of a phosphorus product by sorption and/or crystallization and/or another selective biochemical process and wherein the step of the second recovery of a phosphorus product is carried out in liquid phase after a step of the solid/liquid separation of the digested sludge or directly in the digested sludge giving a further phosphorus depleted digested sludge before a step of solid/liquid separation giving a phosphorus further depleted water.

According to preferred embodiments of the present invention, the step of the secondary recovery of a phosphorus product is performed in conditions of a pH-value higher than 7.

According to preferred embodiments of the present invention, the step of the second recovery of a phosphorus product is preceded by a step of lowering the pH-value.

According to preferred embodiments of the present invention, the method further comprises a step of subjecting the sludge to a step of lyse, such as a step of thermal hydrolysis, complemented by a step of recovery of a phosphorus product.

According to preferred embodiments of the present invention, at least a part of the slurry or the digested sludge is returned to the step of acidification.

According to preferred embodiments of the present invention, in the step of digestion, the dosage of a phosphorus coagulant for a H₂S treatment of the slurry or the phosphorus depleted acidified sludge is at least partially replaced by micro-aeration.

According to further advantageous embodiments of the present invention, a wastewater treatment plant for the treatment of effluent, in particular for recovering phosphorus from the effluent to be treated and for respecting a phosphorus discharge limit in the effluent with the above-mentioned method, comprises an inlet of the wastewater treatment plant receiving the effluent to be treated, a sludge line for treating a sludge derived from the effluent to be treated, wherein the sludge line includes a sludge reactor adapted for acidification, means of solid/liquid separation, means of phosphorus recovery adapted to recover phosphorus from a liquid phase, and a digestor that can be adapted for the production of biogas, a water line including primary and secondary settling tanks adapted for solid/liquid separation, a mainstream wastewater treatment biological system adapted for biological treatment of the effluent as well as for biological phosphorus removal from the effluent, and means for a tertiary phosphorus treatment of the effluent, and an outlet of the wastewater treatment plant for discharging the treated effluent. In particular, the recovery of phosphorus from the effluent to be treated and the respecting a phosphorus discharge limit in the effluent can be simultaneous. The wastewater treatment plant according to preferred embodiments of the present invention can be used to maximize the phosphorus recovery from the effluent to be treated. Advantageously, at least 50% of phosphorus based on the phosphorus content in sludge to be treated can be recovered in the wastewater treatment plant according to preferred embodiments of the present invention, while the treated effluent has a phosphorus content at or below a predetermined phosphorus discharge limit.

With the method and the wastewater treatment plant according to advantageous embodiments of the present invention, the ratio of Bio-P compared to Chem-P in sludge to be treated can be increased. The dosage of coagulant, for instance FeCl₃, can be reduced and ideally completely abandoned at the inlet of the WWTP or at any stage preceding the P-recovery step.

The features and advantages of the invention will become clearer from the detailed description of some of the embodiments of the invention, which are provided purely by way of non-limiting example and with reference to the appended drawings, in which:
- Fig. 1: is a schematic diagram of a wastewater treatment plant (WWTP) for treating effluent in accordance with an embodiment of the present invention;
- Fig. 2: is a schematic diagram of an alternate wastewater treatment plant (WWTP) for treating effluent in accordance with a further embodiment of the present invention;
- Fig. 3: is a schematic diagram of a further alternate wastewater treatment plant (WWTP) for treating effluent in accordance with still a further embodiment of the present invention,
- Fig. 4: is a schematic diagram of an alternate phosphorus precipitation carried out in the WWTP of Fig. 1, 2 or 3;
- Fig. 5: is a schematic diagram of a further alternate phosphorus precipitation carried out in the WWTP of Fig. 1, 2 or 3;
- Fig. 6: is a schematic diagram of a still further alternate phosphorus precipitation carried out in the WWTP of Fig. 1, 2 or 3; and
- Fig. 7: is a schematic diagram of a still further alternate phosphorus precipitation carried out in the WWTP of Fig. 1, 2 or 3; and
- Fig. 8: is a schematic diagram of a combination of modeling and advanced control system carried out in the WWTP of Fig. 1, 2, or 3

Corresponding reference characters indicate corresponding components throughout the several drawings.

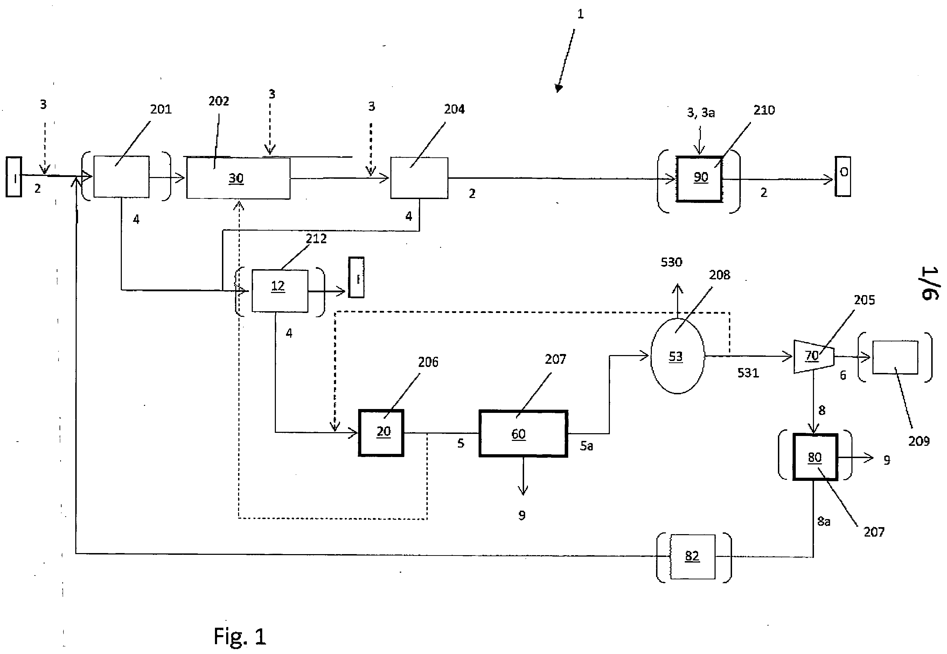

Referring to Figs. 1, 2, and 3, a wastewater treatment plant (WWTP) 1 for the treatment of effluent 2, in particular for recovering phosphorus from the effluent 2 to be treated and for respecting a phosphorus discharge limit in the effluent 2 is illustrated in accordance with preferred embodiments of the present invention.

The wastewater treatment plant 1 generally comprises an inlet I for receiving the effluent 2 to be treated and an outlet O for discharging the treated effluent 2. The wastewater treatment plant 1 comprises a water line, where the phosphorus concentration in the effluent is reduced and concentrated in sludge at least partially through a Biological Phosphorus Removal process, and a sludge line for treating a sludge 4 derived from the effluent 2 to be treated, where the derived sludge is subjected to a phosphorus recovery process. At least a part of the phosphorus depleted acidified water 8, 8a from the sludge line can be recirculated to the water line, such that the final phosphorus concentration in effluent will reach a predetermined amount, such as a required quality target. The required quality target of phosphorus concentration in effluent can be, for example, under 0.5 mg/l or 1 mg/l.

The water line can include a primary settling tank 201 adapted for solid/liquid separation of the effluent 2, a mainstream wastewater treatment biological system 202 adapted for biological treatment of the effluent 2 as well as for biological phosphorus removal from the effluent 2, a secondary settling tank or clarifier 204 adapted for solid/liquid separation of the effluent 2 and means for a tertiary phosphorus treatment 90 of the effluent 2. The mainstream wastewater treatment biological system 202 can include, for example, an activated sludge reactor, a moving bed biofilm reactor, a membrane bio reactor or a sequenced batch reactor (not shown). Especially, the mainstream waste water treatment biological system is adapted for the biological removal of phosphorus: it includes one or more anaerobic/aerobic configurations and can include anoxic zones for detritrification at any place in the configuration.

According to further embodiments of the present invention a Bio-P fraction in sludge 4 can be enhanced using a specific biofilm process. Such a new generation biofilm process (MBBR technology) is able to handle efficient carbon, nitrogen and phosphorus removal from wastewaters with no (or lower) need of additional chemicals: i.e. no need of an external carbon source for nitrogen and phosphorus removal and/or no need of iron salts for phosphorus removal. Organic carbon is a key when trying to remove both nitrogen and phosphorus. In wastewaters and especially municipal wastewaters soluble biodegradable organic carbon is generally not sufficient enough to remove both nitrogen (carbon use for denitrification) and phosphorus (carbon is used in Bio-P mechanism) when using conventional processes. As a consequence, chemicals are used in addition to biological treatment. The new generation of MBBR relies on specific operation and design that ensure a better management of endogenous organic carbon from wastewater. As a result, the process can be integrated in the water treatment scheme of the present invention producing Bio-P sludge with no (or low) Chem-P in phosphorus.

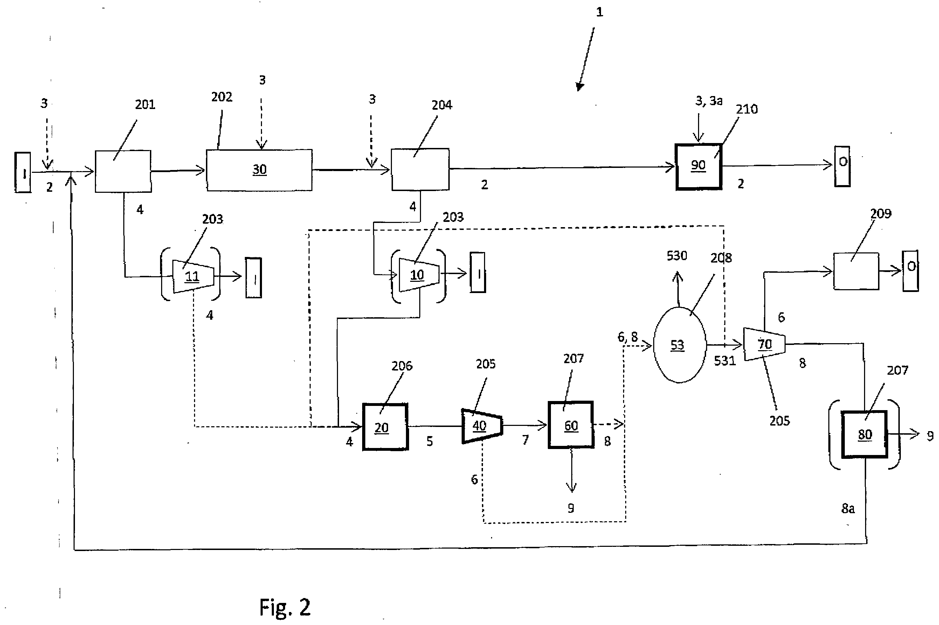

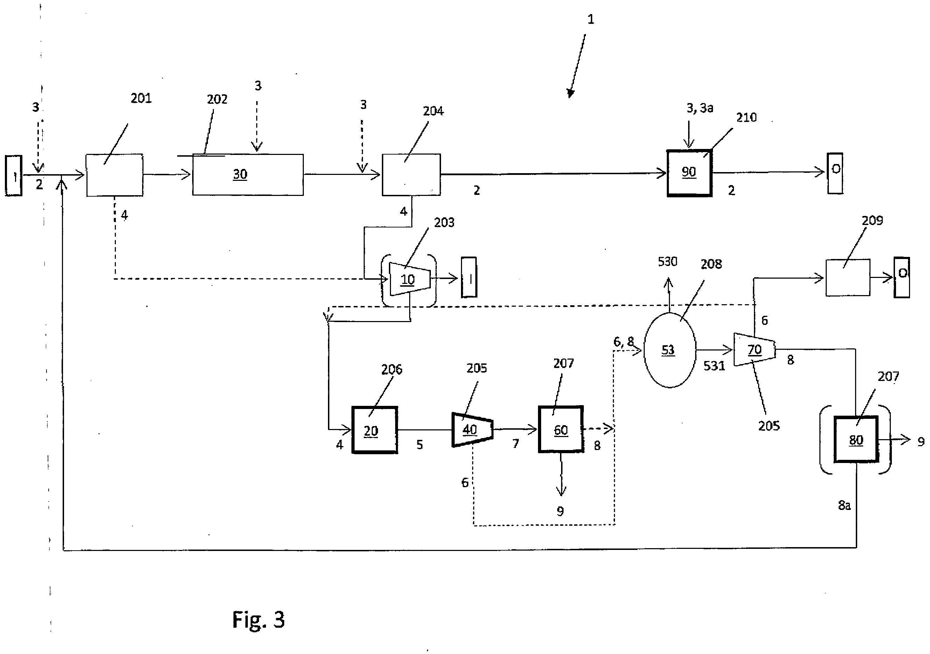

The sludge line can include a sludge reactor 206 adapted for acidification, means of solid/liquid separation (dewatering) 205, means of phosphorus recovery 207 adapted to recover phosphorus from a liquid phase, and a digestor 208 that can be adapted for the production of biogas. The means of solid/liquid separation (dewatering) 205 can be any means for sludge dewatering including, for example, a press filter, a belt filter or a centrifuge. Through dewatering dry matter in the range from about 15% to about 30% can be obtained. The sludge reactor 206 can have a hydraulic retention time comprised between 1 day to 8 days depending on the temperature, which is comprised between 10°C and 40°C. The digestor 208 can be, for example, a mesophilic digestor, a thermophilic digestor, a thermal lysis digestion reactor or an anaerobic digestion membrane reactor. In addition, the sludge line can include one or more means for solid/liquid separation (thickening) 203 (see Figs. 2 and 3), which can be gravity thickener or mechanical thickener, such as, for example, a rotary drum. Through thickening dry matter in the range from about 5% to about 7% can be obtained. The use of a flotation reactor 212 (see Fig. 1) for thickening the sludge 4 can replace the use of the means of solid/liquid separation (dewatering) 205 and the means for solid/liquid separation (thickening) 203.

The sludge 4 to be treated in the sludge line can contain water, organic matter and phosphorus-based matter. It can originate directly from a production line, as, for example, an industrial sludge, or especially from a WWTP 1, as, for example, a primary settling sludge, a biological sludge or a mixture of a primary settling sludge and a biological sludge. Accordingly, the sludge 4 can be derived from industrial wastewater or municipal wastewater containing biodegradable organic matter. The sludge 4 contains preferably between 4 g/l to 150 g/l dry matter, preferentially between 30 and 80g/l; with typical phosphorus concentrations between 500 and 2000 mg/l. The phosphorus is at least partially bounded in cells.

In the case of the WWTP 1, as shown in Figs. 1, 2, and 3, the sludge 4 to be treated in the sludge line can be provided from the primary settling tank 201 as a primary sludge and/or after the effluent 2 has passed the mainstream wastewater treatment biological system 202, and the secondary settling tank 204 as a secondary sludge. The sludge 4 to be treated can be provided to one or more means for solid/liquid separation (thickening) 203 (see Fig. 2 and 3), or advantageously to the flotation reactor 212 (see Fig. 1) to thicken the sludge 4 and to lower the pH-value of the sludge 4. This can be carried out as a pre-acidification12 step by adding a mineral acid or an organic acid. Preferably, the acid added into the sludge 4 to be treated in the flotation reactor 212 is carbon dioxide (CO₂).

The pre-acidification 12 in the flotation reactor 212 can be an optional process step at the WWTP 1, as indicated in Fig. 1, that can be used to treat a mixture of a primary settling sludge provided by the primary settling tank 201 and a biological sludge provided by the secondary settling tank 204. Alternatively, pre-acidification 12 can be carried out in a first flotation reactor 212 for the primary settling sludge provided by the primary settling tank 201 and/or in a second flotation reactor 212 for the biological sludge provided by the secondary settling tank 204. In specific embodiments where the primary sludge and biological sludge are thickened (and optionally acidified) together, a mechanical process will be preferred to avoid a too long contact time that could conduct to early phosphorus release in form of phosphates, and loss of phosphates in supernatant.

Next, an acidification step 20 can be carried out in the sludge reactor 206, in which the pH-value of the sludge 4 to be treated, either provided from the flotation reactor 212 after per-acidification 12 or directly from the primary settling tank 20 and/or the secondary settling tank 204 and means for solid/liquid separation (thickening) 203, is lowered by natural fermentation, under anaerobiose, of organic compounds. The biomass of the acidification 20 originates only from the sludge 4 itself. Typically, the acidification 20 is carried out at a pH-value comprised between 3.5 to 5,5 in the sludge reactor 206 having a hydraulic retention time comprised between 1 day to 8 days depending on the temperature (12 - 35°C). One or more steps of pre-thickening 203 or flotation 212 enables to carry out the acidification step in a reduced volume.

The acidification 20 is based on acidogenesis in anaerobic conditions. This natural bio-acidification process enables a natural lowering of the pH-value through fermentation by a biomass without the additional use of chemicals. The range of the pH-value, which is reached, is generally comprised between 5 and 6. The concentration of volatile fatty acids (VFA) is also strongly increasing, it can typically reach concentrations about 2000 mg/l to 5000 mg/l. In those anaerobic conditions, the phosphorus accumulating organisms are consuming VFA by generating energy from their internally stored polyphosphates, which are then released as phosphates in the reactor 206. Thus, high concentrations of VFA also mean a high phosphorus release rate by polyphosphate-accumulating organisms (PAOs). However, some fermented products and or methanogenesis bacteria could be present in the reactor 206 and have an inhibiting effect on the biomass, such that the natural bio-acidification would not lead to the quickest and complete production of volatile fatty acid/releasing of phosphates. Also, if the pH is not low enough some parasite precipitations for instance of calcium phosphates can occur and limit the available amount of phosphates in sludge.

Moreover, in the specific embodiments where some Chem-P needs to be recovered simultaneously to Bio-P during the acidification 20 or directly after it, the pH-value must be further decreased up to typical values around 3-4 to dissolve iron phosphate. Thus, if needed the acidification 20 can be boosted by adding easy fermenting organics, such as sucrose, glucose or any organic co-substrate (fat, sugar oil, food residue). In addition, the pH-value can also be adjusted chemically. If needed, the acidification 20 can be optimized by the addition of acidic chemicals in the form of liquid, gas or solid (powder) mixed with the sludge 4, for example CO₂ and/or strong acids such as HCl, H₂SO₄ or HNO₃, if the pH-value needs to be further decreased to obtain the optimum pH-conditions for acidogenesis (between 3.5 and 5.5) and or for the dissolution of iron phosphates. Maintaining the pH-value in a 3.5-5.5 range inhibits methanogenic activity (inhibition threshold below pH 6) thus not having "side consumption" or uncontrolled methanogenic development during the phosphorus desorption period (HRT from 1 to 8 days), and simultaneously avoid uncontrolled parasite precipitations of calcium phosphates. If needed, the acidification 20 can be further optimized by addition of a base, for instance NaOH, if the strategy is to keep the pH-value over a specific value, typically 5, to limit the release of iron phosphates. If needed, the acidification 20 can be further optimized by addition of CO₂, as carbon dioxide, present in the form of carbonic acid (H₂CO₃), which is a weak acid. This offers the benefit of enabling to fine-tune the pH-value and enables a "buffer" effect to keep the sludge 4 at a targeted pH-value, typically 5 to 6,3. Moreover, as carbon dioxide is cheap and can be easily recovered from exhaust fumes, this offers the benefit of reducing the quantity of strong acid/base. Carbon dioxide can be recycled from cogeneration or incineration off-gas of the waste water treatment plant and is significantly cheaper than strong acids, which enables a reduction of greenhouse gases emissions. Moreover, the injection of CO₂ at higher temperature would enhance the kinetic of biological reactions.

Several solutions to inject the acid chemicals can be considered (direct mixing in inlet pipe, indirect through dilution in bypass pipe and hydro ejector, etc). The additional acids can be added previously, simultaneously or successively with the acidogenesis. The duration for complete acidogenesis can also be reduced especially by increasing the temperature, such that the reactor 206 in which the acidogenesis is carried during acidification 20 can have a reduced size. Typical durations for the acidogenesis is, for example, 1 to 2 days solid retention time (SRT) at 35°C and 3 to 6 days SRT at 20°C.

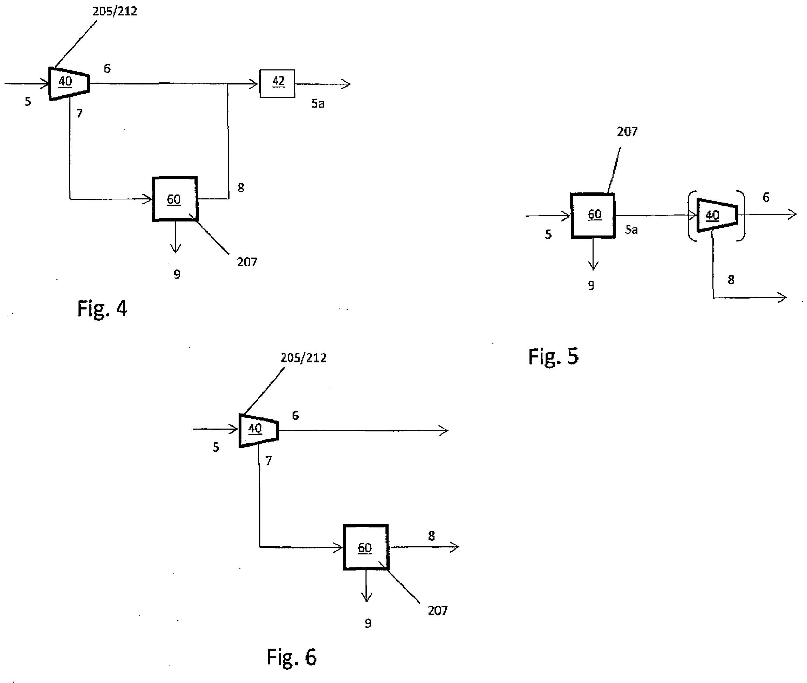

The result of the acidification 20 of the sludge 4 to be treated is an acidified sludge 5, which is rich in volatile fatty acids (VFA) and phosphorus. The acidified sludge 5 can be provided directly to means for phosphorus recovery 207 for the recovery 60 of phosphorus or phosphorus precipitation, as shown in Figs. 1 and 5. Alternately, the acidified sludge 5 can be provided to means for solid/liquid separation 205 for a step of solid/liquid separation (dewatering) 40 prior to the recovery 60 of phosphorus, as shown in Figs. 2, 3, 4, and 6. The step of solid/liquid separation (dewatering) 40 can alternately be added after the recovery 60 of phosphorus, as shown in Fig. 5. The step of solid/liquid separation (dewatering) 40 can be combined with a step of post-acidification for instance in a flotation reactor 212.

Accordingly, the step of recovery 60 of phosphorus can be carried out after the step of solid/liquid separation (dewatering) 40 and the precipitation of phosphorus occurs then in the liquid phase by sorption, such as adsorption, ion exchange, etc., and/or crystallization and or any other selective biochemical process and gives phosphorus depleted acidified water 8, as shown in Figs. 2, 3, 4, and 6, and a phosphorus product 9. Alternately, the precipitation of phosphorus can occur directly in the acidified sludge 5 giving a phosphorus depleted acidified sludge 5a and a phosphorus product 9, as shown in Figs. 1 and 2. The recovery 60 of phosphorus is preferably carried out at a pH-value inferior to 7.5 in order to mitigate the addition of a basis, such as caustic soda. Ca or Mg based products, such as CaCl₂, Ca(OH)₂ or MgCl₂ can be added to obtain respectively a calcium phosphate, such as dicalcium phosphate, also called brushite, or a magnesium phosphate, such as struvite. At the high concentrations of phosphates typically reached, brushite can already precipitate at pH values around 5,5 to 6,5.

The step of solid/liquid separation (dewatering) 40 of either the acidified sludge 5 (if carried out prior to the phosphorus recovery 60) or phosphorus depleted acidified sludge 5a (if carried out after the phosphorus recovery 60) gives a slurry 6 and an acidified water 7 or a phosphorus depleted acidified water 8 (Fig. 2), respectively. The means for solid/liquid separation 205 can include, for example, a press filter, a belt filter or a centrifuge. Additional settling or filtration means can be used in order to reach a sufficient filtrate quality to carry out the step of phosphorus recovery 60.

If required, a lyse step (not shown) can also be implemented at any stage in the sludge line in order to release an additional part of the phosphorus contained in the biomass. The lyse process can be, for example, a thermal hydrolysis process. The lyse process can also be complemented with a step of recovery of a phosphorus product 9. The lyse process can be implemented especially before or after the acidification 20 and prior to the recovery 60 and/or 80 of a phosphorus product 9.

The acidified sludge 5 or 5a or acidified water 7 or 8 can also be re-circulated to a Bio-P basin of the mainstream wastewater treatment biological system 201 in order to increase the efficiency of the enhanced biological phosphorus removal (EPBR) process of the biological system 201 by providing an additional source of carbon, especially a source of volatile fatty acids.

After the recovery 60 of phosphorus, a step of digestion 53 of the phosphorus depleted acidified sludge 5a is carried out in a digestor 207 giving a biogas 530 and a digested sludge 531. The step of digestion is a methanization and can be carried out prior or after the step of recovery of a phosphorus product. The phosphorus depleted acidified water 8 can be mixed with the slurry 6 in a step 43 prior to the step of digestion 53 to avoid the loss of carbon-rich substrate in the step of digestion 53. If the H₂S production in digestion step 53 becomes a problem due to the reduction of coagulant dosage in the waterline of the WWTP 1, a micro aeration process can be added.

Preferably, when digestion is not available at a wastewater treatment plant, the phosphorus depleted acidified water 8 is sent to a mainstream wastewater treatment biological system 30 and the step of recovery 60 of a phosphorus product in liquid phase is carried out downstream of said mainstream wastewater treatment biological system 30.

Following the digestion 53 a further step of solid/liquid separation 70 of the digested sludge 531 can be carried out giving a slurry 6 and a phosphorus depleted acidified water 8. The slurry 6 can optionally be dried in a dryer 209 after the digestion 53 and means of solid/liquid separation 205. Due to the usage of at least a reduced dosage of coagulant according to embodiments of the present invention, the risk of self-ignition in the dryer 209 can be reduced drastically.

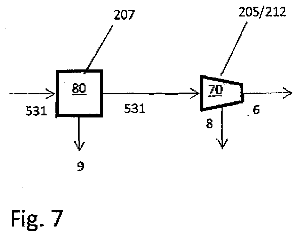

Following the solid/liquid separation 70, the phosphorus depleted acidified water 8 may be returned to the inlet I of the WWTP 1 and, thus, to the water line of the WWTP 1, or a second recovery 80 of phosphorus in liquid phase, namely in the phosphorus depleted acidified water 8, by sorption and/or crystallization and/or any other biochemical selective treatment can be carried out giving a phosphorus further depleted acidified water 8a and a phosphorus product 9, similar to the above described recovery step 60, before the phosphorus depleted acidified water is returned to the inlet I of the WWTP 1. During the digestion 53 additional phosphorus release occurs due to the destruction of biomass. As the digestion is carried out on a phosphorus depleted sludge after a first step of recovery of phosphorus, the low concentrations of phosphorus and possibly of calcium respectively magnesium in sludge can limit the in-situ precipitations of the liberated phosphates with calcium and/or magnesium in the digestor 208 that usually occur due to the pH-value condition in the digestor 208, so that a part of the released phosphates can be available for further recovery. The step of solid/liquid separation 70 can be followed by a pre-settling or filtration step in order to optimize the filtrate quality before the phosphorus recovery step. The steps of solid/liquid separation 70 can be combined with a step of pH-value adjustment for instance by acid gas mixing in order to further avoid uncontrolled precipitation of calcium or magnesium phosphates before the Phosphorus recovery step. Alternately, the second recovery 80 of phosphorus can be carried out directly after digestion 53 on the sludge 531, before the step of solid/liquid separation 70 (see Fig. 7) and possibly after a step of pH lowering to increase the Phosphorus recovery. In some embodiments the digested sludge or slurry can alternatively, at least partly, be recycled and mixed with the sludge 4 to be treated to increase the total phosphorus recovery. Prior to returning the phosphorus depleted acidified water 8 or the phosphorus further depleted acidified water 8a is returned to the inlet I of the WWTP 1 a step 82 of nitrogen stripping and/or nitrogen recovery can be carried out. As the phosphorus concentration is low in the phosphorus depleted acidified water 8 to be treated any uncontrolled precipitation of struvite is avoided which makes the N recovery step easier to operate.

Referring again to the waterline of the WWTP 1, the phosphorus concentration in the phosphorus depleted acidified water 8 or the phosphorus further depleted acidified water 8a back flowing from the sludge line is reduced as described above and, thus, the phosphorus concentration in the effluent 2 will be closer to the required quality target. However, depending on the efficiency of the EPBR processes, such as the described phosphorus recovery processes, the quality target might not be achieved yet. The remaining phosphorus in the effluent 2 can then be eliminated or at least reduced by either precipitation using chemicals, such as a phosphorus coagulant 3, for example iron salts, and/or sorption mechanisms, such as adsorption or ion exchange, using phosphorus specific sorbents. Accordingly, a tertiary phosphorus treatment 90 by precipitation using a phosphorus coagulant 3, or sorption using phosphorus specific sorbents 3a can be carried out in means for tertiary phosphorus treatment 210 at the end of the water line close to the outlet O of the WWTP 1.

The phosphorus specific sorbents 3a can be regenerable in situ or, for example, as a resin or as a specific hydroxide, so that the tertiary treatment can enable to even increase the global phosphorus recovery rate from the effluent 2 to be treated.

As can be seen from the foregoing, the method for operating a wastewater treatment plant 1 for treating effluent 2, in particular for recovering phosphorus from the effluent 2 to be treated and for respecting a predetermined phosphorus discharge limit in the effluent 2 is able to increase the ratio of Bio-P compared to Chem-P in sludge to be treated, which leads to the use of a significantly reduced dosage of phosphorus coagulant and other chemicals in the phosphorus removal and recovery processes according to advantageous embodiments of the present invention.

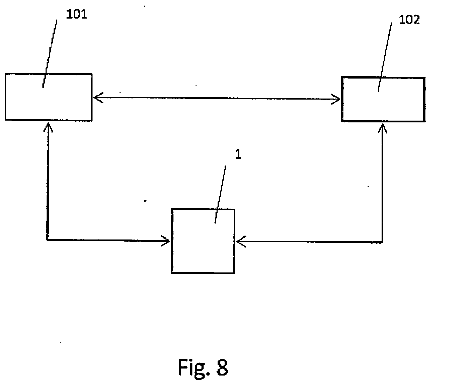

Specific data from the wastewater treatment plant 1 is given as input to calibrate a specific modeling tool 101 (see Fig. 8), especially the composition of the effluent 2: concentrations of phosphorus, phosphates, ammonium, calcium, magnesium, alkalinity, DCO etc, as non limiting examples; so as the dimensioning of the plant. The modeling tool enables to calculate the phosphorus recovery ratio so as the phosphorus concentration in effluent 2 leaving the plant in different configurations, and helps to decide the advantageous embodiment to maximize the phosphorus recovery and simultaneously respect the predetermined phosphorus discharge limit in effluent 2. This tool settles the operational parameters, for instance the pH in bio-acidification step (20) or the amount and position of dosage of the coagulant 3. An advanced real time control system 102 is implemented on the wastewater treatment plant 1 to continuously feed the modeling tool in order to adjust the process parameters.

### Experimental Results

Simulations were performed using SUMO software on three different configurations:
A - an existing WWTP for calibration
B - a standard configuration with dedicated anaerobic zone (Bio-P)
C - a standard configuration without Bio-P (only Chem-P process).

Table A shows the compartimentation of wastewater for the case B.

**Table 1**

| | B | Unit |
|---|---|---|
| Flow | 15000 | m³/d |
| P | 12 | mg/l |
| PO4-P | 7 | mg/l |
| TKN | 73.3 | mg/l |
| NH4-N | 51 | mg/l |
| Ca | 150 | mg/l |
| Mg | 15 | mg/l |
| CaCO₃ | 350 | mg/l |
| COD | 800 | mg/l |
| COD soluble | 40 | % |
| BOD,5 | 376 | mg/l |
| TSS | 348 | mg/l |
| VSS | 75 | % |

The WWTP B enables a primary treatment allowing ∼50% of TSS removal. The biological treatment was designed to reach the concentrations in output as shown in Table 2.

**Table 2**

| | B | Unit |
|---|---|---|
| COD | 40-50 | mg/l |
| TOTAL N | ∼10 | mg/l |
| NH₄-N | 1.5 | mg/l |
| NO₃ | 6 | mg/l |
| Total P | ≤1 | mg/l |

In scenarios B with a Bio-P process, the volume of a dedicated anaerobic zone represents around 10% from the total volume of biological treatment. The anoxic volume represented typically 40% to 50% of the total volume of biological treatment, with internal recirculation rates up to 600%. The sludge retention time (SRT) was fixed to 30 days in the case A and 20 days in standard case B. The primary sludge was thickened in a gravity thickener up to 60 kg/m³ dry matter. The secondary sludge was thickened in a mechanical thickener up to 60 kg/m³ dry matter.

In some specific scenarios, a bio-acidification step was simulated with around 4 days SRT at room temperature. The WWTP B is equipped with a digestor heated at 35°C. The sludge age in the digestor was about 20 days. After digestion, the sludge is dewatered up to 23% dry matter. Iron chloride was dosed in input or output from a secondary clarifier.

### Phosphorus recovery steps

To represent the recovery steps, specific proportions of PO₄ and Ca, respective Mg and NH₄, were removed from the sludge, respective filtrate. The results are shown in Table 3.

**Table 3**

| Recovery in | Producing | % removal PO4 | % removal Ca | % removal NH4 | % removal Mg |
|---|---|---|---|---|---|
| Acid sludge | Bushite | 85 | 90 | 0 | 0 |
| Acid sludge | Struvite | 80 | 0 | 90 | 90 |
| Centrate post digestion | Bushite | 90 | 95 | 0 | 0 |
| Centrate post digestion | Struvite | 85 | 0 | ∼20% (depending from [PO₄]) | 95 |

In case of phosphorus recovery from iron rich sludge, 90% of iron ion concentration was also removed to represent the necessary trapping of iron before the precipitation/recovery step.

For the phosphorus compartimentation the different forms of phosphorus considered in mode are:
- Phosphate ions or "PO₄-P"
- Phosphorus (P) in Phosphate Accumulating Organisms (PAOs), or "Bio-P"
- P contained into the biomass (excl. PAO), or "Cell-P"
- P bounded to iron in form of Hydrous Ferric Oxide or vivianite -> "Fe-P"
- P in form of Struvite -> "P, STR"
- P in form of Amorphous Calcium Phosphate ACP -> "CaP"
- Particulate phosphorus
- Other forms (colloids, soluble biodegradable, etc.)

### Results regarding P-Release in digestion and bio-acidification and P recovery performance

In the different simulations, a pH-value around 4 was reached in bio-acidification, and around 7 in the digestion. In those conditions, the release rate for Bio-P reaches 90% in bio-acidification and almost 100% in digestion. The release rate for Fe-P reaches ∼65-70% in bio-acidification while it stays by zero or even negative (re-precipitation of phosphates with the iron contained in sludge) in the digestion. The release rate for Cell-P reaches ∼10% in bio-acidification and 30% to 40% in the digestion. The release rate for particulate P reaches ∼75% in bio-acidification and ∼80% in the digestion. Finally, struvite and calcium phosphates are precipitating in the digestion, so that the maximal P-recovery rate in scenarios without bio-acidification (and with Bio-P) is 34% (scenario 2, table 4). With a recovery step following bio-acidification it can reach 60% (scenario 3, table 4).

In scenarios without a Bio-P process, a maximal P-recovery rate of 7% can be reached without bio-acidification (scenario 8, Table 4). The bio-acidification enables to increase this rate up to 50% (scenario 9, Table 4), but would suppose high operational costs for iron trapping. However, a biological process based on anoxic - anaerobic - aerobic steps was simulated, representing the case where a zone from anoxic basin is dedicated to Bio-P. With such a system, the Bio-P efficiency can near the performances of a classical Bio-P system in condition to add an organic substrate locally (in simulation, methanol). All results are shown in Table 4.

### Complementary of bio-acidification and digestion steps

In the digestion, the destruction of the biomass enables the release of additional "Cell-P" compared to what happened in bio-acidification. The CaP, respective struvite, respective iron phosphate, precipitation phenomenon is also reduced if the digestion is following a first recovery step, as the concentration of calcium, respective NH₄, and Mg, respective Fe, are significantly lower in the digestion. Thus, an additional recovery step in centrate enables to gain a few extra % (scenarios 5, 6, and 10, Table 4). This is highly depending on the hardness and alkalinity in influent, so as in sludge.

### Impact of recovery on backflow and coagulant dosage

In scenarios with a Bio-P process, P accumulated in PAOs is released in the digestor and without P-recovery step, is returned to the inlet of primary treatment. This P in filtrate represents up to 40 % from total P in scenario 1 of Table 4. The P-recovery steps allow to reduce the PO₄ concentration in backflow up to 90 %. In scenarios 5 and 6, Table 4 this concentration decreases to no more than 60 mg/l. As a consequence, less coagulant dosage is necessary and/or lower P concentrations are reached in effluent. Indeed, no coagulant is necessary at all to respect a discharge limit of 1 mg/l in scenarios 2 to 6, Table 4. Also, the phosphate concentrations in effluent show that it would be easy to reach 0,5 or 0,6 mg/l if necessary. In scenarios without BioP, this effect is moderated by the partial re-precipitation of iron phosphates in the digestor. Between 3% and 10% savings on coagulant dosage were observed.

### Struvite vs. Brushite

No significant impact was observed on biogas production, struvite enables to get less N in backflow which slightly enhances the performance of Bio-P (∼2% on fP, BioP). The recovery rate for brushite is expected to be slightly higher than for Struvite. All together the results are comparable.

Some scenarios were also simulated on a longer period using variable concentrations of the different species in order to test the robustness of the system. Relatively stable performance was observed.

**Table 4**

| Simulation nb | BioP | P-Rec1 after blo- acid | Product1 | P-Rec2 after digestion | Product2 | FeCl3 dosage (m3/d) | [P] in effluent | [PO4] in effluent | %P-recovery / Input WWTP |
|---|---|---|---|---|---|---|---|---|---|
| 1 | yes | / | / | / | / | 1.7 | 0,94 | 0,23 | / |
| 2 | yes | / | / | x | Struvite | 0 | 0,92 | 0,34 | 34% |
| 3 | yes | x | Brushite | / | / | 0 | 0,99 | 0,42 | 60% |
| 4 | yes | x | Struvite | / | / | 0 | 0,93 | 0,36 | 68% |
| 6 | yes | x | Brushite | x | Struvite | 0 | 0,87 | 0,31 | 62% |
| 6 | yes | x | Struvite | x | Struvite | 0 | 0,93 | 0,27 | 60% |
| 7 | no | / | / | / | / | 3,3 | 0,97 | 0,41 | / |
| 8 | no | / | / | x | Struvite | 3,1 | 1,01 | 0,48 | 7% |
| 9 | no | x | Brushite | / | / | 3.2 | 1 | 0,44 | 50% |
| 10 | no | x | Brushite | x | Struvite | 3,1 | 0,91 | 0.38 | 63% |

### Call out list of elements

- I: inlet WWTP
- O: outlet WWTP
- 1: WWTP
- 2: effluent
- 3: phosphorus coagulant
- 3a: P-absorbents
- 4: sludge
- 5: acidified sludge
- 5a: phosphorus depleted acidified sludge
- 6: slurry
- 7: acidified water
- 8: phosphorus depleted acidified water
- 8a: phosphorus further depleted water
- 9: phosphorus product
- 10: solid/liquid separation of secondary sludge (thickening)
- 11: solid/liquid separation of primary sludge (thickening)
- 12: a pre-acidification (thickening of sludge 4)
- 20: acidification of a sludge 4
- 30: mainstream wastewater biological treatment
- 40: solid/liquid separation (dewatering) of the acidified sludge 5
- 42: mixing of phosphorus depleted water 8 and 6 slurry
- 53: digestion
- 530: biogas
- 531: digested sludge
- 60: first recovery of a phosphorus product 9
- 70: solid/liquid separation (dewatering) of the digested sludge 531
- 80: second recovery of a phosphorus product 9
- 82: N-stripping
- 90: tertiary phosphorus treatment
- 201: primary settling tank
- 202: mainstream wastewater treatment biological system
- 203: means for solid/liquid separation (thickening)
- 204: secondary settling tank
- 205: means for solid/liquid separation (dewatering)
- 206: sludge reactor
- 207: means for phosphorus recovery
- 208: digestor
- 209: dryer
- 210: means for tertiary phosphorus treatment
- 212: flotation reactor

## Claims

1. Method for operating a wastewater treatment plant (1) for treating effluent (2), in particular for recovering phosphorus from the effluent (2) to be treated and for respecting a phosphorus discharge limit in the effluent (2), the method comprising the steps of:
- carrying out an enhanced biological phosphorus removal process on at least a part of the effluent (2) to be treated in a water line of the plant (1);
- deriving a sludge (4) from the effluent (2) that is being treated in the water line of the plant (1);
- subjecting the derived sludge (4) to a step of acidification (20) giving an acidified sludge (5), wherein the step of acidification (20) includes a step of acidogenesis;
- adding a mineral or organic acid and/or a base and/or carbon dioxide and/or an organic co-substrate before, after and or simultaneously to the step of acidification (20) to further control the pH-value; and
- carrying out a step of a first recovery (60) of a phosphorus product (9) in a liquid phase of the acidified sludge (5) or directly in the acidified sludge (5) giving a re-usable product and a phosphorus depleted acidified sludge (5a).

2. Method according to claim 1, further comprising the steps of:
- using a modeling tool to define process steps and adjust process parameters for treating the effluent to current conditions; and
- using a real time control system to continuously apply the adjusted process parameter to the operation of the wastewater treatment plant (1).

3. Method according to claim 1 or 2, further including the steps of:
- carrying out a step of digestion (53) of the phosphorus depleted acidified sludge (5a) giving a digested sludge (531);
- carrying out a step of a solid/liquid separation (70) of the digested sludge (531) giving a slurry (6) and a phosphorus depleted acidified water (8); and
- returning at least a part of the phosphorus depleted acidified water (8) to the water line of the plant (1) for mixing with the effluent (2).

4. Method according to any of the preceding claims, further including the step of subjecting the effluent (2) mixed with a phosphorus depleted acidified water (8) to a tertiary phosphorus treatment (90) at an end of the water line to reduce the remaining phosphorus in the effluent (2) to achieve the phosphorus discharge limit in the effluent (2) before the effluent (2) leaves the plant (1) and/or recover phosphorus.

5. Method according to any of the preceding claims, further including an additional step of a solid/liquid separation (40) of the acidified sludge (5), giving a slurry (6) and an acidified water (7), wherein the step of the solid/liquid separation (40) of the acidified sludge (5) is carried out either before or after the step of the first recovery (60) of a phosphorus product (9).

6. Method according to claim 5, wherein the step of the first recovery (60) of a phosphorus product (9) is carried out either in the acidified water (7) giving a phosphorus depleted acidified water (8) or directly in the acidified sludge (5) giving a phosphorus depleted acidified sludge (5a).

7. Method according to claim 5 or 6, wherein the phosphorus depleted acidified water (8) is added to the slurry (6) prior to the step of digestion (53).

8. Method according to any of the preceding claims, wherein at least a part of the acidified sludge (5) or (5a) or the acidified water (7) or (8) is returned to the enhanced biological phosphorus removal process in the water line of the plant (1).

9. Method according to any of the preceding claims, wherein the step of the first recovery (60) of a phosphorus product is performed in conditions of a pH-value lower than 7.

10. Method according to any of the preceding claims, further including a step of a second recovery (80) of a phosphorus product (9) by sorption and/or crystallization and/or another selective biochemical process and wherein the step of the second recovery (80) of a phosphorus product (9) is carried out in liquid phase after a step of the solid/liquid separation (70) of the digested sludge (531) or directly in the digested sludge (531) giving a further phosphorus depleted digested sludge (531) before a step of solid/liquid separation (70) giving a phosphorus further depleted water (8a).

11. Method according to claim 10, wherein the step of the secondary recovery (80) of a phosphorus product is performed in conditions of a pH-value higher than 7.

12. Method according to claim 10, wherein the step of the second recovery (80) of a phosphorus product (9) is preceded by a step of lowering the pH-value

13. Method according to any of the preceding claims, further including a step of subjecting the sludge (4) to a step of lyse, such as a step of thermal hydrolysis, complemented by a step of recovery (60, 80) of a phosphorus product (9).

14. Method according to any of the preceding claims, wherein at least a part of the slurry (6) or the digested sludge (531) is returned to the step of acidification (20).

15. Method according to any of the preceding claims, wherein in the step of digestion (53) the dosage of a phosphorus coagulant for a H₂S treatment of the slurry (6) or the phosphorus depleted acidified sludge (5a) is at least partially replaced by micro-aeration.

16. Wastewater treatment plant (1) for the treatment of effluent (2), in particular for recovering phosphorus from the effluent (2) to be treated and for respecting a phosphorus discharge limit in the effluent (2) with the method according to claims 1 to 15, wherein the wastewater treatment plant (1) comprises:
- an inlet (I) of the wastewater treatment plant (1) receiving the effluent (2) to be treated;
- a sludge line for treating a sludge (4) derived from the effluent (2) to be treated, wherein the sludge line includes a sludge reactor (206) adapted for acidification, means of solid/liquid separation (205), means of phosphorus recovery (207) adapted to recover phosphorus from a liquid phase, and a digestor (208);
- a water line for treating the effluent (2) including primary and secondary settling tanks (201, 204) adapted for solid/liquid separation, a mainstream wastewater treatment biological system (202) adapted for biological treatment of the effluent (2) as well as for biological phosphorus removal from the effluent (2), and means for a tertiary phosphorus treatment (90) of the effluent (2); and
- an outlet (O) of the wastewater treatment plant (1) for discharging the treated effluent (2).
